# EUROPÄISCHE PATENTSCHRIFT

(11) **EP 1 101 044 B1**
(45) Veröffentlichungstag und Bekanntmachung des Hinweises auf die Patenterteilung: **05.11.2003**
(21) Anmeldenummer: 00938512.1
(22) Anmeldetag: 27.04.2000
(51) Int. Cl.: F16F 13/14

(54) **GUMMILAGER MIT RADIALER WEGBEGRENZUNG UND DÄMPFUNGSMITTELKANAL**
SILENT BLOCK WITH RADIAL TRAVEL LIMIT AND DAMPING FLUID DUCT
SILENTBLOC A COURSE RADIALE LIMITEE ET CONDUIT DE FLUIDE AMORTISSEUR

(30) Priorität: 30.04.1999 DE 19919863
(43) Veröffentlichungstag der Anmeldung: 23.05.2001
(73) Patentinhaber: ZF Lemförder Metallwaren AG, 49441 Lemförde (DE)
(72) Erfinder: VOSSEL, Andreas, D-49086 Osnabrück (DE); MEYERINK, Frank, D-49393 Lohne (DE); HÜNECKE, Joachim, D-49401 Damme (DE)
(86) Internationale Anmeldenummer: DE0001307
(87) Internationale Veröffentlichungsnummer: WO00066910

(56) Entgegenhaltungen:
- EP-A- 0 418 718
- DE-A- 19 729 290
- US-A- 5 413 319

## Beschreibung

Die Erfindung betrifft ein Gummilager mit radialer Wegbegrenzung und mindestens einem Dämpfungsmittelkanal, welches aus einem Innenteil mit rohrförmiger Innenkontur, einem das Innenteil umgebenden, mit ihm durch Vulkanisation verbundenen Elastomer und einem aus einem oder mehreren Kunststoffteilen gebildeten Kanalträger besteht. In das Elastomer ist zudem ein Käfig aus Guß oder Blech einvulkanisiert.

Insbesondere im Automobilbau werden Gummilager unterschiedlichster Ausführung vielfach eingesetzt. Je nach Einsatzzweck werden dabei an die Dämpfungseigenschaften der Lager sehr unterschiedliche Anforderungen gestellt. In einigen Fällen sind die Lager so ausgebildet, daß sie neben der Dämpfung durch die Materialeigenschaften des Elastomers eine hydraulische Dämpfung radial eingetragener Kräfte ermöglichen. Dies wird dadurch gewährleistet, daß das mit dem Innenteil vulkanisierte Elastomer von einem, im allgemeinen aus Kunststoff gebildeten, ringförmigen Element umgeben ist und durch die Formgebung der Außenkontur des Elastomers und der Innenkontur dieses Elementes beziehungsweise einer über das Elastomer bei der Montage übergeschobenen Hülse zwischen den Teilen Kammern zur Aufnahme eines flüssigen Dämpfungsmittels gebildet werden. Wie auch von anderen auf hydraulischer Dämpfung basierenden Systemen bekannt ist, wird die Dämpfung durch die Verdrängung des in den Kammern vorhandenen Dämpfungsmittels erreicht. Hierzu ist es erforderlich, daß die Kammern durch einen Kanal verbunden werden, welcher es ermöglicht, daß das Dämpfungsmittel sich je nach der Belastung des Lagers von einer Kammer zur anderen bewegen kann. Zur Realisierung der Dämpfungsmittelkanäle sind unterschiedliche Vorgehensweisen bekannt geworden. Eine Möglichkeit besteht darin, den Dämpfungsmittelkanal in dem Elastomer auszubilden. Vorteilhafter und gebräuchlicher ist es jedoch, das Elastomer mit einem Kunststoffelement zu umgeben, welches gleichzeitig Anschlagflächen für eine Wegbegrenzung ausbildet und außerdem als Kanalträger dient. Der Kanal wird dabei durch eine in den Kanalträger eingelassene Nut, im allgemeinen zwischen dem Kanalträger und einer Außenhülse des Lagers ausgebildet.

Aus der DE 36 17 787 ist ein solches Lager bekannt. Bei der in der Schrift dargestellten Lösung ist das Elastomer von einem zweiteiligen, als Kanalträger dienenden Element umgeben, wobei der Kanal in dessen äußerer Umfangsfläche ausgebildet ist. Ein anderes Beispiel ist durch die DE 197 29 290 gegeben. In der Schrift wird es bei der vorgenannten Lösung als nachteilig angesehen, daß das um das Elastomer angeordnete Element für den Kanal zweiteilig ausgebildet ist. Daher wird vorgeschlagen, den Kanalträger einteilig auszubilden. Damit das Element montiert werden kann, besitzt es eine Öffnung und umgibt das Elastomer nicht vollständig. Der Schrift ist zu entnehmen, daß die lichte Weite dieser Öffnung größer als der Durchmesser des mit dem Elastomer verbundenen Innenteils ist. Hierdurch ist die Kanallänge gegenüber der Lösung nach der DE 36 17 787 verkürzt, was insbesondere im Hinblick auf eine möglicherweise wünschenswerte Massedämpfung, wie sie durch den von der hin und her schwingenden Masse einer Dämpfungsflüssigkeit verursachten Tilgereffekt gegeben ist, nachteilig sein kann.

Aufgabe der vorliegenden Erfindung ist es, ein Gummilager mit radialer Wegbegrenzung und einem Dämpfungsmittelkanal zu schaffen, bei welchem die Länge des mittels eines Kanalträgers realisierten Dämpfungsmittelkanals zur Realisierung unterschiedlicher Dämpfungseigenschaften, bei gleichzeitig leichter Montierbarkeit des Kanalträgers, variabel gestaltet werden kann.

Die Aufgabe wird durch ein Gummilager mit den Merkmalen des Hauptanspruchs gelöst. Vorteilhafte Ausgestaltungen beziehungsweise Weiterbildungen des erfindungsgemäßen Lagers sind durch die Unteransprüche gegeben.

Das Lager weist in bekannter Weise ein Innenrohr auf, mit welchem ein Elastomer durch Vulkanisation verbunden ist. Das Elastomer ist von dem Kanalträger umschlossen, welcher aus einem oder mehreren Kunststoffteilen besteht und sich mittels Abstützelementen am Elastomer abstützt. Der in die Außenfläche des Kanalträgers eingeordnete Dämpfungsmittelkanal verbindet die zwischen dem Elastomer und dem Kanalträger ausgebildeten Kammern für das Dämpfungsmittel. Erfindungsgemäß weist der Kanalträger im Bereich der Kammern Ausnehmungen zum Aus- oder Eintritt von Dämpfungsmittel auf, welche durch den Dämpfungsmittelkanal miteinander verbunden und auf dem Umfang des Kanalträgers jeweils im Bereich der Abstützelemente und diesen gegenüberliegend angeordnet sind. Erfindungsgemäß weisen der Kanalträger auf seiner Innenkontur und/oder das Elastomer auf seiner Außenkontur im Bereich der Anschlagflächen für die radiale Wegbegrenzung eine Vertiefung zum Einschluß von Dämpfungsmittel beim Anschlagen des Elastomers an die entsprechende Anschlagfläche infolge eines durch eine radial eingetragene Kraft bewirkten Einfederns des Lagers auf.

Im Bereich der in den Anschlagflächen ausgebildeten Vertiefungen ist gemäß einer Ausbildung der Erfindung in dem Kanalträger ein Loch zum Entweichen von Dämpfungsmittel vorgesehen. Durch die Anordnung der Ausnehmungen und gegebenenfalls der Löcher ist die Zirkulation des Dämpfungsmittels zwischen den Kammern, aber auch jeweils innerhalb einer Kammer ermöglicht. Zudem ermöglichen die Löcher in den Vertiefungen der Anschlagflächen für die Radialwegbegrenzung ein Zirkulieren der dort bei entsprechender Krafteinwirkung eingeschlossenen Dämpfungsflüssigkeit.

Bei einer Ausführungsform der Erfindung ist der in die Außenfläche des Kanalträgers eingeordnete Dämpfüngsmittelkanal über die im Bereich der Kammern vorgesehenen Ausnehmungen hinaus verlängert. Hierdurch wird neben der durch das Zirkulieren des Dämpfungsmittels zwischen den Kammern bewirkten viskosen Dämpfung eine Dämpfung durch den Tilgereffekt der Flüssigkeitsmasse (sogenannte Massedämpfung) erreicht. Die Löcher in den Vertiefungen der Anschlagflächen sind dabei in dieser Kanalverlängerung angeordnet. Durch ein solches Loch und die ihm benachbarte, an die Anschlagfläche angrenzende Ausnehmung im Kanalträger kann das Dämpfungsmittel auch innerhalb einer Kammer zirkulieren.

Eine weitere vorteilhafte Weiterbildung betrifft die Ausbildung zusätzlicher Kanäle für das Dämpfungsmittel, welche quer zu dem die Ausnehmungen verbindenden, konzentrisch um die Lagerachse verlaufenden Dämpfungsmittelkanal verlaufen, wobei die Löcher in den Vertiefungen der Radialanschläge in diesen zusätzlichen Kanälen angeordnet sind. Ist, entsprechend der vorstehend erläuterten Ausgestaltung, außerdem der umlaufende Kanal über die Ausnehmungen im Kanalträger verlängert, so schneiden sich der umlaufende und die ihn kreuzenden, in axialer Richtung verlaufenden Kanäle jeweils in einem der in den Vertiefungen der Axialanschläge vorgesehenen Löcher.

Gemäß einer weiteren vorteilhaften Ausgestaltung des erfindungsgemäßen Lagers ist an dem Elastomer im Bereich der Abstützelemente eine Lippe ausgeformt oder eingebracht, welche als Ventil für das sich im Dämpfungsmittelkanal bewegende Dämpfungsmittel wirkt. Die Beweglichkeit der Lippe beziehungsweise das Öffnungsverhalten des Ventils und damit letztlich das Dämpfungsverhalten des Lagers werden dabei durch die geometrische Ausbildung der Abstützelemente bestimmt.

Der Kanalträger kann, wie bereits betont, einteilig oder mehrteilig ausgebildet sein. Im Sinne der Erfindung ist dabei auch eine einteilige Ausbildung als vorteilhaft anzusehen, bei welcher der Kanalträger das Elastomer in einem Winkel von etwa 300° umschließt. In diesem Fall sind die gegenüber den Abstützelementen vorgesehenen Ausnehmungen in dem Kanalträger als Durchbrüche ausgebildet.

Eine andere Ausgestaltungsmöglichkeit besteht darin, daß der Kanalträger aus zwei Kunststoffteilen gebildet ist, die so ausgeformt sind, daß sie in ihrer Lage zueinander durch ihre Form fixiert sind. Es ist aber auch möglich, die Fixierung zweier den Kanalträger ausbildender Kunststoffteile durch einen Stift zu realisieren.

Bei einer weiteren Ausgestaltungsmöglichkeit besteht der Kanalträger aus zwei Kunststoffteilen, welche mittels eines Scharniers miteinander verbunden sind. Das erfindungsgemäße Lager zeichnet sich insbesondere im Hinblick auf die Gestaltung des Kanalträgers dadurch aus, daß der Kanalträger leicht zu montieren ist und die Kanallänge entsprechend dem geforderten Dämpfungsverhalten, bei Beibehaltung der grundsätzlichen Form des Kanalträgers leicht variiert werden kann.

Nachfolgend soll die Erfindung anhand eines Ausführungsbeispiels näher erläutert werden. In den zugehörigen Zeichnungen zeigen:
- Figur 1:: Einen axialen Schnitt durch das erfindungsgemäße Lager,
- Figur 2:: Das Lager gemäß Figur 1 in einer Darstellung mit einem radial geführten Schnitt,
- Figur 3a:: Den Kanalträger in einer räumlichen Darstellung,
- Figur 3b:: Den Kanalträger nach Figur 3a um 180° um die Lagerachse gedreht,
- Figur 4a:: Ein Kunststoffteil eines aus zwei Kunststoffteilen gebildeten Kanalträgers in räumlicher Darstellung,
- Figur 4b:: Das Kunststoffteil nach Figur 4a in flächenprojizierter Darstellung,
- Figur 5:: Das gesamte Lager in einer räumlichen Darstellung mit einem Ventil.

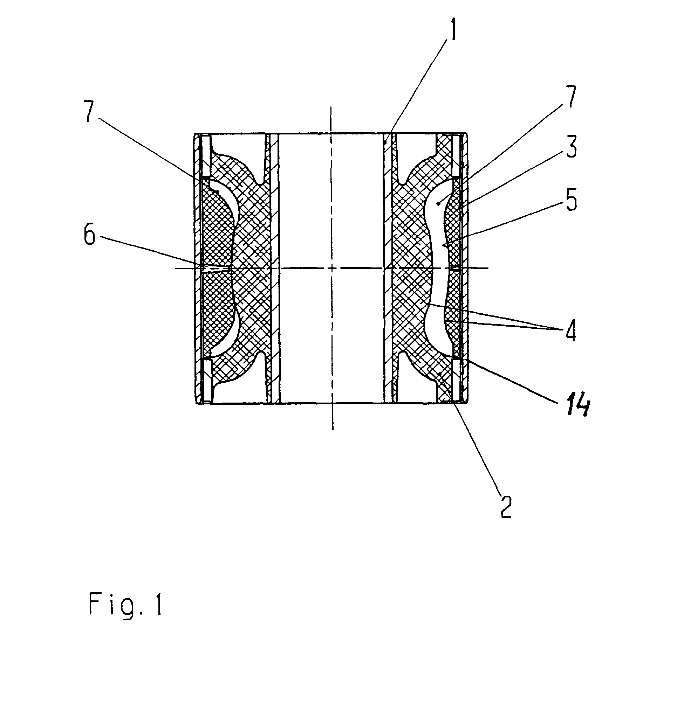

In der Figur 1 wird der grundsätzliche Aufbau des Lagers in einer Schnittdarstellung verdeutlicht, bei welcher der Schnitt parallel zur Lagerachse geführt ist. Das rohrförmige Innenteil 1 wird von dem Elastomer 2 umgeben, welches durch Vulkanisation mit dem Innenteil 1 verbunden ist. Um das Elastomer 2 herum ist der Kanalträger 3 angeordnet. Der gesamte Aufbau wird in einer äußeren Hülse 14 aufgenommen. Wie zu erkennen ist, weist der Kanalträger 3 im Bereich der Anschlagfläche 4 eine Vertiefung 5 auf. Beim Einfedern des Lagers, infolge einer radial einwirkenden Kraft, kann zwischen dem Kanalträger 3 mit der Anschlagfläche 4 und der Anschlagfläche 4 des Elastomers 2 Dämpfungsmittel eingeschlossen werden. Hierdurch wird der Radialweg begrenzt und gleichzeitig eine dämpfende Wirkung erzielt. Im Bereich der mit der Vertiefung 5 versehenen Anschlagfläche 4 des Kanalträgers 3 ist ein Loch 6 vorgesehen, durch welches das Dämpfungsmittel bei weiterer Einfederung und damit ansteigenden Druck in den umlaufend um die Lagerachse angeordneten Dämpfungsmittelkanal 10 beziehungsweise in den im Ausführungsbeispiel ebenfalls vorhandenen Querkanal 11 austreten kann.

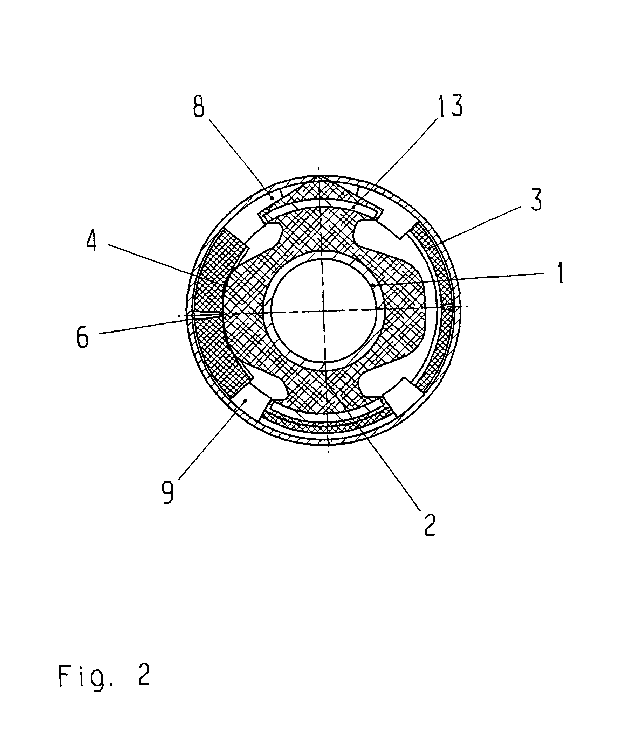

Durch die Figur 2 wird der Aufbau des gleichen Lagers nochmals in der Darstellung eines radial durch das Lager geführten Schnittes verdeutlicht. Hierbei wird ersichtlich, daß der Kanalträger 3 außer den durch die Ausformung der Abstützelemente 8 gebildeten Ausnehmungen 9 weitere, gegenüber den Abstützelementen 8 angeordnete Ausnehmungen 9 aufweist, welche ebenfalls mit dem Dämpfungsmittelkanal 10 verbunden sind und das Zirkulieren des Dämpfungsmittels zwischen den Kammern 7 ermöglichen. Um die Abstützung des Kanalträgers 3 auf dem Elastomer 2 zu ermöglichen, ist in diesen im Bereich der Abstützelemente 8 ebenso, wie auf deren gegenüberliegender Seite, ein Käfig 13 einvulkanisiert. In bekannter Weise dient als Käfigmaterial beispielsweise Guß oder Blech. Gut zu erkennen sind auch die Anschlagflächen 4 zur Radialwegbegrenzung mit den darin eingeordneten Löchern 6 für das Entweichen des Dämpfungsmittels.

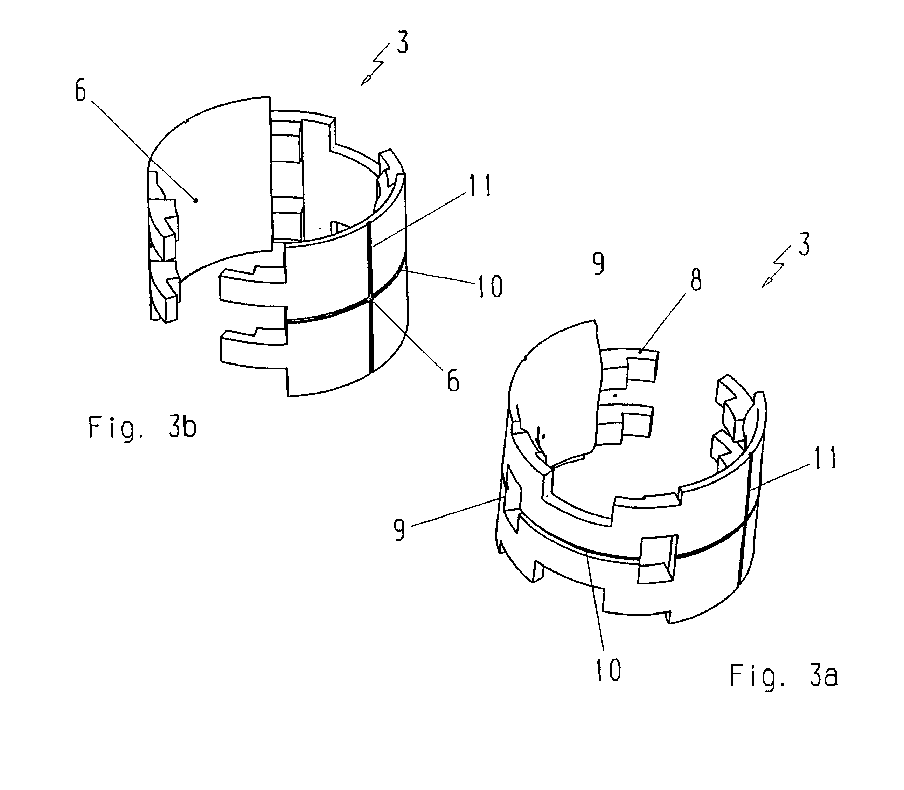

Durch die Figur 3a und 3b wird der Aufbau des Kanalträgers 3 nochmals in Form einer räumlichen Darstellung verdeutlicht. In der Figur 3a sind die Ausnehmungen 9, welche gegenüber den Abstützelementen 8 angeordnet und durch den Dämpfungsmittelkanal 10 miteinander verbunden sind, zu erkennen. Der Dämpfungsmittelkanal 10 ist in dem dargestellten Beispiel über die Ausnehmungen 9 hinaus verlängert. Hierdurch wird infolge des Tilgereffekts eine zusätzliche Massedämpfung durch die Masse des sich in entsprechender Weise im Kanal verteilenden Dämpfungsmittels erreicht. Außerdem wird eine zusätzliche Dämpfung im Bereich der Anschlagflächen 4 für die Radialwegbegrenzung erreicht. Hierzu sind die Anschlagflächen 4 des Kanalträgers 3 mit einer geringen Vertiefung 5 ausgestattet, in deren Mitte ein Loch 6 zum Austreten des Dämpfungsmittels in den über die Ausnehmungen 9 hinaus verlängerten Kanal oder in einen Querkanal 11 vorgesehen ist. Die Figur 3b verdeutlicht die Ausbildung des Kanalträgers 3 nochmals in einer um 180° gedrehten Darstellung. In der Figur ist dabei der zusätzlich zu dem um die Lagerachse umlaufenden Kanal 10 vorgesehene und in axialer Richtung verlaufende Kanal 11 gut zu erkennen. Dieser querverlaufende Dämpfungsmittelkanal 11 schneidet den konzentrisch um die Lagerachse umlaufenden Kanal 10 genau an der Stelle, an der das Loch 6 in der Anschlagfläche 4 vorgesehen ist. Wie zu ersehen, ist der in der Figur dargestellte Kanalträger 3 einstückig ausgebildet. Seine Montage erfolgt durch geringfügiges Aufbiegen des Kunststoffeils, welches sich nach dem Aufschieben auf das Elastomer 2 in einem Winkel von etwa 300° um den Gummi legt.

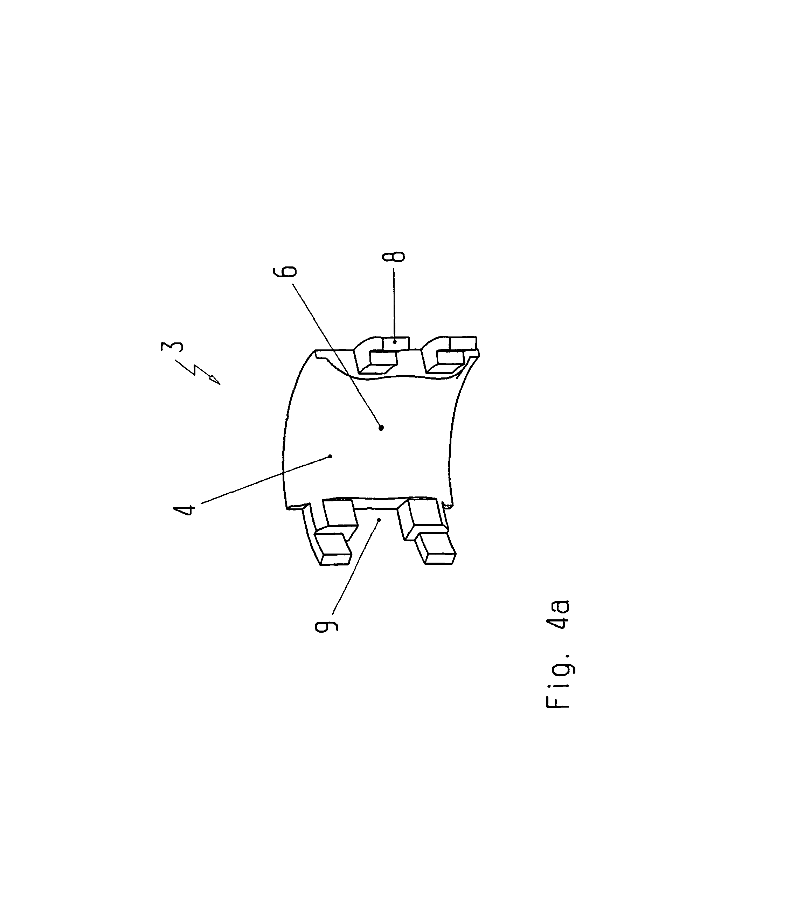

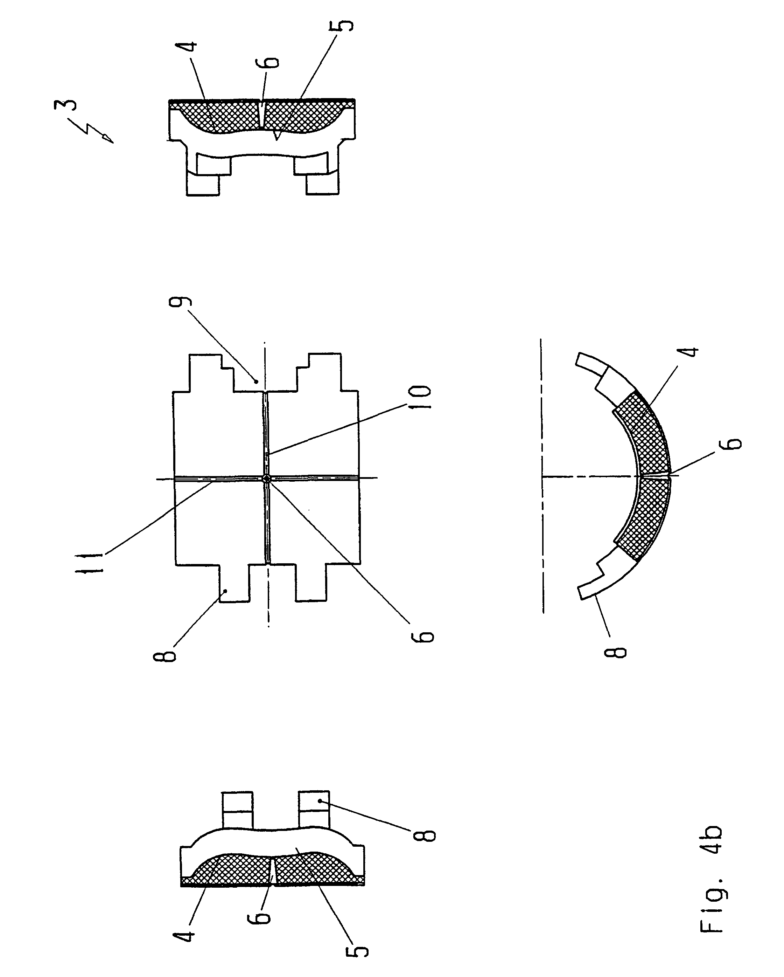

Eine andere denkbare Ausgestaltungsform wird durch die Figur 4 verdeutlicht. Dabei zeigt die Figur 4a eine Hälfte eines aus zwei Kunststoffteilen ausgebildeten Kanalträgers 3. Die zweite Hälfte des Kanalträgers 3 ist in vergleichbarer Weise ausgebildet und kann gegen das erste Teil durch die Formgebung fixiert werden. Die Figur 4b verdeutlicht das in der Figur 4a dargestellte Teil in Form einer flächenprojizierten Darstellung in unterschiedlichen Ansichten. In allen Abbildungen ist das im Bereich der Anschlagflächen 4 vorgesehene Loch 6 erkennbar. Das Loch 6 ist vorteilhafterweise in dem Kreuzungspunkt zwischen dem umlaufenden Kanal 10 und dem hierzu zusätzlich vorgesehenen Querkanal 11 eingeordnet

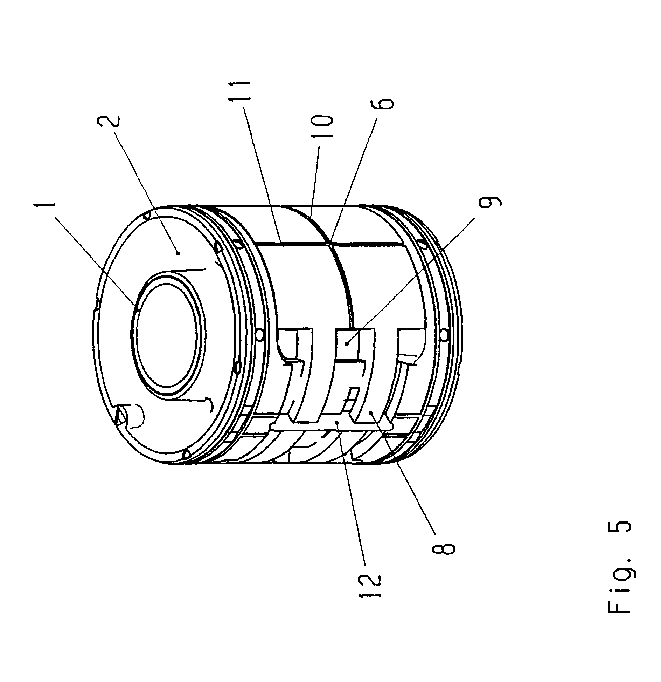

Die Figur 5 zeigt die räumliche Darstellung eines gemäß dem erfinderischen Prinzip ausgebildeten Lagers, bei dem zur zusätzlichen Beeinflussung des Dämpfüngsverhaltens an dem Elastomer 2 im Bereich der Abstützelemente 8 eine axial verlaufende Lippe 12 ausgeformt ist. Diese Gummilippe 12 wirkt als ein in den umlaufenden Kanal 10 eingeordnetes Ventil. Dabei wird die Beweglichkeit der Lippe 12 und damit das Öffnungsverhalten des von ihr gebildeten Ventils neben der Dicke der Lippe 12 durch die geometrische Ausbildung der Abstützelemente 8 und ihren Abstand zu der Lippe 12 bestimmt.

### Bezugszeichenliste

- 1: Innenteil
- 2: Elastomer
- 3: Kanalträger
- 4: Anschlagfläche
- 5: Vertiefung
- 6: Loch
- 7: Kammer
- 8: Abstützelement
- 9: Ausnehmung
- 10: umlaufender Kanal, Dämpfungsmittelkanal
- 11: Querkanal, Dämpfungsmittelkanal
- 12: Lippe
- 13: Käfig
- 14: Hülse

## Patentansprüche

1. Gummilager mit radialer Wegbegrenzung und Dämpfungsmittelkanal, bestehend aus einem Innenteil mit rohrförmiger Innenkontur, einem das Innenteil umgebenden, mit ihm durch Vulkanisation verbundenen Elastomer und einem aus einem oder mehreren Kunststoffteilen gebildeten, das Elastomer abschnittsweise umschließenden und sich am Elastomer mittels Abstützelementen abstützenden Kanalträger, wobei auf der Innenseite des Kananalträgers Anschlagflächen zur radialen Wegbegrenzung ausgebildet sind und in die Außenfläche des Kanalträgers mindestens ein Dämpfungsmittelkanal eingeordnet ist, welcher zwischen dem Elastomer und dem Kanalträger gebildete Kammern zur Aufnahme eines flüssigen Dämpfungsmittels miteinander verbindet,
**dadurch gekennzeichnet, daß**
der Kanalträger (3) im Bereich der Kammern (7) Ausnehmungen (9) zum Aus- oder Eintritt von Dämpfungsmittel aufweist, die durch den Dämpfungsmittelkanal (10) miteinander verbundene und auf dem Umfang des Kanalträgers (3) jeweils im Bereich der Abstützelemente (8) und diesen gegenüberliegend angeordnet sind, und daß auf der Innenkontur des Kanalträgers (3) und/oder auf der Außenkontur des Elastomers (2) im Bereich der Anschlagflächen (4) Vertiefungen (5) zum Einschluß von Dämpfungsmittel beim Anschlagen des Elastomers (2) an die entsprechende Anschlagfläche (4) infolge eines durch eine radial eingetragene Kraft bewirkten Einfederns des Lagers ausgebildet sind.

2. Gummilager nach Anspruch 1,
**dadurch gekennzeichnet, daß** im Bereich der in den Anschlagflächen (4) ausgebildeten Vertiefungen (5) in dem Kanalträger (3) ein Loch (6) zum Entweichen von Dämpfungsmittel vorgesehen ist.

3. Gummilager nach Anspruch 1 oder 2,
**dadurch gekennzeichnet, daß** der in die Außenfläche des Kanalträgers (3) eingeordnete Dämpfungsmittelkanal (10) über die im Bereich der Kammern (7) vorgesehenen Ausnehmungen (9) hinaus verlängert ist, so daß neben der, durch das Zirkulieren des Dämpfungsmittels zwischen den Kammern (7) bewirkten viskosen Dämpfung eine Dämpfung durch den Tilgereffekt der Flüssigkeitsmasse (Massedämpfung) gegeben ist, wobei die gegebenenfalls in den Vertiefungen (5) der Anschlagflächen (4) vorgesehenen Löcher (6) in dem verlängerten Dämpfungsmittelkanal (10) angeordnet sind.

4. Gummilager nach eienem der Ansprüche 1 bis 3,
**dadurch gekennzeichnet, daß** in die Außenfläche des Kanalträgers (3) zusätzliche Kanäle (11) eingeordnet sind, welche quer zu dem die Ausnehmungen (9) verbindenen, konzentrisch um die Lagerachse verlaufenden Dämpfungsmittelkanal (10) verlaufenden und die in den Vertiefungen (5) der Anschlagflächen (4) gegebenenfalls vorgesehenen Löcher (6) in dem quer verlaufenden Kanälen (11) angeordnet sind.

5. Gummilager nach einem der Ansprüche 1 bis 4,
**dadurch gekennzeichnet, daß** das Elastomer (2) im Bereich der Abstützelemente (8) eine in axialer Richtung verlaufende, als Ventil für das sich im
Dämpfungsmittelkanal (10) bewegende Dämpfungsmittel wirkende Lippe (12) aufweist, wobei die Beweglichkeit der Lippe (12) und damit das Öffnungsverhalten des Ventils durch die geometrische Ausbildung der Abstützelemente (8) bestimmt ist.

6. Gummilager nach einem der Ansprüche 1 bis 5,
**dadurch gekennzeichnet, daß** der Kanalträger (3) als ein einteiliges Kunststoffteil ausgebildet ist, welches das mit dem Innenteil (1) verbundene Elastomer (2) zu etwa 300° umschließt, wobei die gegenüber den Abstützelementen (8) vorgesehenen Ausnehmungen (9) in dem Kanalträger (3) als Durchbrüche realisiert sind.

7. Gummilager nach einem der Ansprüche 1 bis 5,
**dadurch gekennzeichnet, daß** der Kanalträger (3) aus zwei Kunststoffteilen gebildet ist, die durch ihre Form in ihrer Lage zueinander fixiert sind.

8. Gummilager nach einem der Ansprüche 1 bis 5,
**dadurch gekennzeichnet, daß** der Kanalträger (3) aus zwei Kunststoffteilen gebildet ist, die durch einen Stift in ihrer Lage zueinander fixiert sind.

9. Gummilager nach einem der Ansprüche 1 bis 5,
**dadurch gekennzeichnet, daß** der Kanalträger (3) aus zwei, mittels eines Scharniers miteinander verbundenen Kunststoffteilen gebildet ist.

## Claims

1. A rubber bearing with radial travel limitation and with a damping-medium duct, consisting of an inner part with a tubular inner contour, an elastomer surrounding the inner part and connected thereto by vulcanisation, and a duct support formed from one or more plastic parts, enclosing the elastomer intermittently and supported on the elastomer by means of supporting elements, wherein stop faces for radial travel limitation are formed on the inside of the duct support and at least one damping-medium duct is placed in the outer surface of the duct support, said duct connecting chambers for receiving a liquid damping medium to one another which are formed between the elastomer and the duct support,
**characterised in that**
in the region of the chambers (7) the duct support (3) has recesses (9) for the emission and admission of damping medium, which are connected to one another by the damping-medium duct (10) and are disposed on the periphery of the duct support (3) in each instance in the region of the supporting elements (8) and situated opposite the latter, and **in that** depressions (5) are formed on the inner contour of the duct support (3) and/or on the outer contour of the elastomer (2) in the region of the stop faces (4) for the entrapment of damping medium when the elastomer (2) strikes against the corresponding stop face (4) as a consequence of a compression of the bearing which has been brought about by a radially applied force.

2. Rubber bearing according to Claim 1,
**characterised in that** in the region of the depressions (5) in the duct support (3) which are formed in the stop faces (4) a hole (6) is provided for the escape of damping medium.

3. Rubber bearing according to Claim 1 or 2,
**characterised in that** the damping-medium duct (10) placed in the outer surface of the duct support (3) is extended beyond the recesses (9) provided in the region of the chambers (7), so that, in addition to the viscous damping brought about by the circulation of the damping medium between the chambers (7), a damping is afforded by the absorber effect of the liquid mass (mass damping), the holes (6) which are optionally provided in the depressions (5) of the stop faces (4) being disposed in the extended damping-means duct (10).

4. Rubber bearing according to one of Claims 1 to 3,
**characterised in that** additional ducts (11) are placed in the outer surface of the duct support (3) which extend at right angles to the damping-medium duct (10) connecting the recesses (9) and extending concentrically around the axis of the bearing, and the holes (6) optionally provided in the depressions (5) of the stop faces (4) are disposed in the transversely extending ducts (11).

5. Rubber bearing according to one of Claims 1 to 4,
**characterised in that** the elastomer (2) has in the region of the supporting elements (8) a lip (12) extending in the axial direction and acting as a valve for the damping medium moving in the damping-medium duct (10), the motility of the lip (12) and therefore the opening behaviour of the valve being determined by the geometrical design of the supporting elements (8).

6. Rubber bearing according to one of Claims 1 to 5,
**characterised in that** the duct support (3) takes the form of a one-piece plastic part which encloses the elastomer (2) connected to the inner part (1) over an angular range of approximately 300°, the recesses (9) in the duct support (3) which are provided opposite the supporting elements (8) being realised in the form of apertures.

7. Rubber bearing according to one of Claims 1 to 5,
**characterised in that** the duct support (3) is formed from two plastic parts which are fixed to one another in their position by virtue of their shape.

8. Rubber bearing according to one of Claims 1 to 5,
**characterised in that** the duct support (3) is formed from two plastic parts which are fixed to one another in their position by a pin.

9. Rubber bearing according to one of Claims 1 to 5,
**characterised in that** the duct support (3) is formed from two plastic parts which are connected to one another by means of a hinge.

## Revendications

1. Silentbloc à course radiale limitée et conduit de fluide amortisseur, composé d'une partie intérieure avec un contour intérieur en forme de tube, d'un élastomère entourant la partie intérieure et fixé à cette dernière par vulcanisation et d'un support de conduit, formé d'un ou de plusieurs éléments en matière synthétique, entourant en partie l'élastomère et s'appuyant sur l'élastomère au moyen d'éléments d'appui, moyennant quoi des surfaces d'arrêt destinées à la limitation de la course radiale sont formées sur la partie intérieure du support de conduit et au moins un conduit de fluide amortisseur est installé dans la surface extérieure du support de conduit, lequel relie, entre l'élastomère et le support de conduit, les chambres formées destinées à recevoir un fluide amortisseur,
**caractérisé en ce que**
le support de conduit (3) comporte, dans la zone des chambres (7), des creux (9) pour la sortie ou l'entrée du fluide amortisseur, qui sont reliés entre eux par le conduit de fluide amortisseur (10) et qui sont disposés sur le pourtour du support de conduit (3) dans la zone de chacun des éléments d'appui (8) et en face de ces derniers, et **en ce que** des cavités (5) sont formées sur le contour intérieur du support de conduit (3) et/ou sur le contour extérieur de l'élastomère (2), dans la zone des surfaces d'arrêt (4), pour l'inclusion du fluide amortisseur lors de l'arrêt de l'élastomère (2) sur la surface d'arrêt (4) correspondante suite à la compression du palier occasionné par introduction d'une force radiale.

2. Silentbloc selon la revendication 1,
**caractérisé en ce que** dans la zone des cavités (5) formées sur les surfaces d'arrêt (4), une perforation (6) pour l'échappement du fluide amortisseur est prévue dans le support de conduit (3).

3. Silentbloc selon la revendication 1 ou 2,
**caractérisé en ce que** le conduit de fluide amortisseur (10) installé dans la surface extérieure du support de conduit (3) est prolongé au-delà des creux (9) prévus dans la zone des chambres (7), de sorte qu'en plus de l'amortissement visqueux engendré par la circulation du fluide amortisseur entre les chambres (7) un amortissement a lieu grâce à l'effet d'atténuation de la masse du fluide (amortissement de masse), moyennant quoi les perforations (6) prévues le cas échéant dans les cavités (5) des surfaces d'arrêt (4) sont disposées dans le conduit de fluide amortisseur prolongé (10).

4. Silentbloc selon l'une quelconque des revendications 1 à 3,
**caractérisé en ce que** des conduits supplémentaires (11) sont installés dans la surface extérieure du support de conduit (3), lesquels sont disposés transversalement au conduit de fluide amortisseur (10) installé de manière concentrique autour de l'axe de palier et reliant les creux (9), et **en ce que** les perforations (6) prévues le cas échéant dans les cavités (5) des surfaces d'arrêt (4) sont disposées dans les canaux transversaux (11).

5. Silentbloc selon l'une quelconque des revendication 1 à 4,
**caractérisé en ce que** l'élastomère (2) est pourvu, dans la zone des éléments d'appui (8), d'une lèvre (12) ayant effet de soupape pour le fluide amortisseur circulant dans le conduit de fluide amortisseur (10), la mobilité de la lèvre (12) et par conséquent le comportement d'ouverture de la soupape étant déterminés par la forme géométrique des élément d'appui (8).

6. Silentbloc selon l'une quelconque des revendication 1 à 5,
**caractérisé en ce que** le support de conduit (3) est constitué d'un élément en matière synthétique en une seule partie, lequel entoure à peu près sur 300° l'élastomère (2) relié à la partie intérieure (1), les creux (9) prévus dans le support de conduit (3) en face des éléments d'appui (8) étant réalisés sous forme d'ajours.

7. Silentbloc selon l'une quelconque des revendication 1 à 5,
**caractérisé en ce que** le support de conduit (3) est constitué de deux éléments en matière synthétique qui sont fixés dans leur position l'un par rapport à l'autre du fait de leur forme.

8. Silentbloc selon l'une quelconque des revendication 1 à 5,
**caractérisé en ce que** le support de conduit (3) est constitué de deux pièces en matière synthétique qui sont fixées dans leur position l'une par rapport à l'autre par une cheville.

9. Silentbloc selon l'une quelconque des revendication 1 à 5,
**caractérisé en ce que** le support de conduit (3) est constitué de deux pièces en matière synthétique reliées entre elles au moyen d'une charnière.
